# EUROPÄISCHE PATENTSCHRIFT

(11) **EP 0 332 138 B1**
(45) Veröffentlichungstag und Bekanntmachung des Hinweises auf die Patenterteilung: **22.06.1994**
(21) Anmeldenummer: 89103999.2
(22) Anmeldetag: 07.03.1989
(51) Int. Cl.: A01D 43/10, A01D 82/00, A01D 80/02

(54) **Aufbereiter für landwirtschaftliche Erntemaschinen**
Conditioning device for an agricultural harvesting machine
Dispositif de traitement pour une moissonneuse agricole

(30) Priorität: 10.03.1988 DE 3808031
(43) Veröffentlichungstag der Anmeldung: 13.09.1989
(73) Patentinhaber: GREENLAND GMBH & CO. KG, D-78244 Gottmadingen (DE)
(72) Erfinder: Maier, Martin, D-7702 Gottmadingen (DE)
(74) Vertreter: Grünecker, Kinkeldey, Stockmair & Schwanhäusser Anwaltssozietät

(56) Entgegenhaltungen:
- EP-A- 0 076 686
- GB-A- 2 172 182
- US-A- 3 921 376

## Beschreibung

Die vorliegende Erfindung betrifft einen Aufbereiter für mit Mähscheiben versehene landwirtschaftliche Erntemaschinen, insbesondere Kreiselmäher, bestehend aus einer in Fahrtrichtung der Maschine gesehen, hinter den Mähscheiben angeordneten, sich quer zur Fahrtrichtung der Maschine erstreckenden, im wesentlichen zylindrischen Hohlwelle, an der eine Vielzahl von sich radial nach außen erstreckenden V-förmigen Fingerpaaren befestigt ist.

Mit Kreiselmähern lassen sich hohe Flächenleistungen erzielen, so daß auch kurze Schönwetterperioden voll genützt werden können. Sie ermöglichen einen gleichmäßigen Schnitt, ohne daß Schmutz ins Futter gelangt, wobei gleichmäßige lockere Schwaden abgelegt werden, bei denen die Trocknung unverzüglich einsetzen kann. Das gleichmäßige Rotieren der Kreisel ergibt ein gleichmäßiges Mähen ohne Wellenschnitt und ohne daß die Grasnarbe verletzt wird.

Eine Verkürzung der Trockenzeit kann durch die Verwendung eines Aufbereiters erzielt werden, der in Fahrtrichtung gesehen hinter den Mähscheiben des Kreiselmähers angeordnet ist und von der Zapfwelle des den Kreiselmäher ziehenden Schleppers in eine Rotationsbewegung versetzt wird. Dieses Aufbereiten (oder Konditionieren), verkürzt je nach Futterart und Witterung die Trockenzeit um einen halben bis zwei Tage, was insbesondere beim Silieren großer Partien einen erheblichen Zeitgewinn darstellt. Ein derartiger Aufbereiter besteht üblicherweise aus einer Vielzahl von V-förmigen Fingerpaaren, die auf einer als Rotor ausgebildeten Hohlwelle spiralförmig angeordnet sind. Dadurch wird das von den Mähscheiben angelieferte Futter dahingehend aufbereitet, daß die Fingerpaare die verdunstungshemmende Wachsschicht anreiben und den Halmen des Futters einen leichten Knick erteilen. Dadurch fällt dieses sperrig in schnell trocknenden Schwaden ab, und zwar in einem gleichmäßigen Gutfluß ohne Verstopfung.

Die Intensität des Aufbereitens kann dabei durch Verstellung eines Prallblechs gesteuert werden, wobei kurzes Erntegut durch Schwadleitbleche dirigiert wird, die Schwadform durch die Stellung einer Abwurfklappe bestimmt wird und die Rotordrehzahl auf das spezielle Futter eingestellt werden kann.

Aus der EP-A-76 686 ist ein Aufbereiter zum Fördern und/oder Behandeln von Erntegut bekannt, der eine Trägereinrichtung aufweist mit einer daran befestigten Vielzahl von sich nach außen erstreckenden Mitnahmeelementen, wobei jedes Mitnahmeelement einen Basisabschnitt zur Befestigung an der Trägereinrichtung und zwei Abschnitte zum Mitnehmen des Ernteguts aufweist. Die Trägereinrichtung weist dabei einen Basisabschnitt und einen Abschirmabschnitt auf, wobei letzterer an der Vorderseite des Basisabschnitts des Mitnahmeelements für das Erntegut relativ zu der beabsichtigten Bewegung des Mitnahmeelementes angeordnet ist und jeder der Mitnahmeabschnitte geneigt zu der Trägereinrichtung in einer Ebene im wesentlichen quer zu der beabsichtigten Bewegung des Mitnahmeelementes für das Erntegut ist. Die Mitnahmeelemente sind über Führungen an der Trägereinrichtung angeordnet, welche Anlagebereiche bilden, wobei die Mitnahmeelemente relativ zur Trägereinrichtung durch Gleitbewegungen längs der Führungen ausweichen können.

Die Trägereinrichtung weist dabei ein quer gerichtetes Kanalabschnittsteil auf, wobei die Mitnahmeelemente an der Innenfläche eines der Flansche des Kanalabschnitts befestigt sind, so daß jeder Verbindungsabschnitt der beiden V-förmigen Arme des Mitnahmeelementes innerhalb des Kanalabschnitts liegt. Die Arme der Mitnahmeelemente erstrecken sich dabei durch Öffnungen in der Trägereinrichtung, deren Seiten die Führungen für die Arme der Mitnahmeelemente bilden.

Ein derartiger Aufbereiter ist material- und zeitaufwendig in der Herstellung und damit teuer. Er weist ferner noch den Nachteil, daß ein Verschwenken der V-förmigen Finger der Mitnahmeelemente um die Längsachse in ihrer Bolzenverbindung mit der Trägereinrichtung bei Auftreffen auf ein Hindernis nicht ausgeschlossen ist.

Aufgabe der vorliegenden Erfindung ist es, einen Aufbereiter zu schaffen, der einfach und billig herstellbar ist und bei dem die V-förmigen Fingerpaare leicht auswechselbar sind, nach ihrem Einsetzen jedoch fest und unverrückbar ihren Platz an der Außenwand der Hohlwelle beibehalten.

Ausgehend von einem Aufbereiter der eingangs näher genannten Art wird zur Lösung dieser Aufgabe vorgeschlagen, daß die Oberfläche der Hohlwelle mit mehreren parallelen zur Längsrichtung der Hohlwelle verlaufenden und im Abstand voneinander angeordneten, sich im wesentlichen über die Gesamtlänge der Hohlwelle erstreckenden und peripher nach außen ragenden Hohlrippen versehen ist, und daß jedes V-förmige Fingerpaar fest mit einem Haltefuß verbunden ist, dessen Längsachse sich in Verbindungsrichtung der beiden Finger erstreckt und der an seiner Unterseite eine an die Form der Hohlrippe und die Oberfläche der Hohlwelle angepaßte Form aufweist.

Vorteilhafterweise hat der Querschnitt der Hohlrippen die Form eines Dreiecks oder halben Ovals.

Zur Befestigung der V-förmigen Fingerpaare ist die Hohlwelle mit einer Vielzahl von langgestreckten Öffnungen versehen, deren Längsrichtung senkrecht zur Längsachse der Hohlrippe verlaufen und deren Mittelpunkte mit den Scheitelpunkten der Hohlrippen zusammenfallen; vorteilhafterweise sind dabei die Öffnungen benachbarter Hohlrippen versetzt zueinander bezüglich eines Hohlwellenquerschnitts angeordnet.

Der Haltefuß der V-förmigen Fingerpaare ist vorteilhafterweise mit einer zentralen Öffnung versehen, in die ein Haltebolzen einsetzbar ist, dessen unteres Ende sich bis in das Innere der Hohlwelle erstreckt und mit einem Klemmstück versehen ist, dessen an der Unterseite der Hohlrippe anliegende Oberfläche eine an diese angepaßte Form aufweist.

Mit dem erfindungsgemäßen Aufbereiter wird der Vorteil erzielt, daß die V-förmigen Fingerpaare schnell und mit wenigen Handgriffen einsetzbar sind. Zu diesem Zweck werden die an der Unterseite der Haltebolzen befestigten Klemmstücke durch die langgestreckten Öffnungen in das Innere der Hohlwelle eingeführt, dort um 90° verschwenkt, so daß die Oberseite der Klemmstücke in das Innere der Hohlrippen eingreift und anschließend durch Anziehen einer Mutter sicher befestigt. Die große Auflagefläche mit der einerseits der Haltefuß auf den Hohlrippen anliegt, andererseits die Oberseite des Klemmstücks an der Unterseite der Hohlrippen anliegt, bewirkt eine sichere kraftschlüssige Verbindung zwischen den Fingerpaaren und der Hohlwelle, so daß auch bei Auftreffen auf größere Hindernisse ein Verdrehen bzw. Verschwenken der Fingerpaare um die Längsachse des Haltebolzen ausgeschlossen ist. Trotzdem genügt die Elastizität bei Verwendung eines geeigneten Material, z.B. Kunststoff für die V-förmigen Fingerpaare, um ein Zerstören bei Auftreffen auf ein Hindernis zu vermeiden.

Im folgenden wird die Erfindung anhand der Zeichnung näher erläutert, in der ein vorteilhaftes Ausführungsbeispiel dargestellt ist. Es zeigen:
- Figur 1: einen Querschnitt durch eine erfindungsgemäß ausgestaltete Hohlwelle,
- Figur 2: die Anordnung der Öffnungen auf der abgewickelten Oberfläche der Hohlwelle,
- Figur 3: einen Querschnitt durch ein V-förmiges Fingerpaar,
- Figur 4: einen um 90° gegenüber Figur 3 versetzten Querschnitt durch das V-förmige Fingerpaar und einen Teil der Hohlwelle,
- Figur 5: eine Seitenansicht eines Haltebolzens und
- Figur 6: eine um 90° zu Figur 5 versetzte Seitenansicht dieses Haltebolzens.

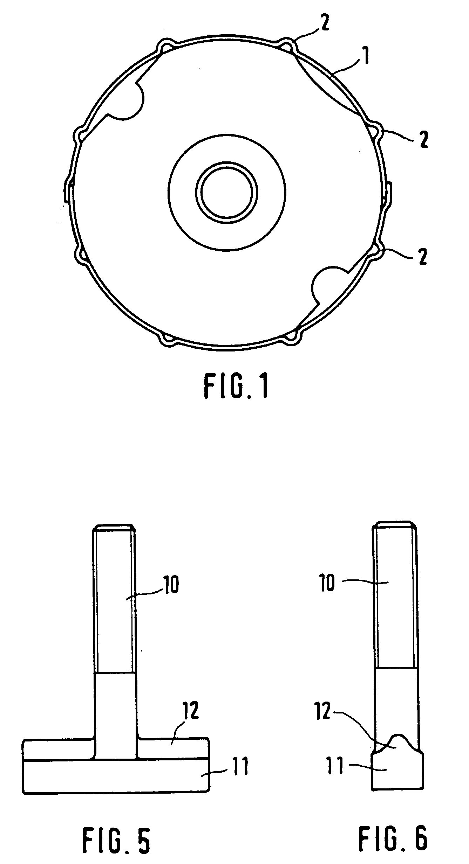

In Figur 1 ist mit 1 eine Hohlwelle bezeichnet, die als Rotor für einen Aufbereiter dient. Die Oberfläche der Hohlwelle 1 ist mit einer Vielzahl von parallel zur Längsachse der Hohlwelle 1 verlaufenden, im Abstand voneinander angeordneten, sich im wesentlichen über die Gesamtlänge der Hohlwelle erstreckenden und peripher nach außen ragenden Hohlrippen 2 versehen, die einen beliebigen Querschnitt aufweisen können, z.B. einen halbkreisförmigen, rechteckförmigen, dreieckförmigen etc. Querschnitt. Im gewählten Ausführungsbeispiel von Figur 1 ist die Hohlwelle 1 mit acht Hohlrippen 2 versehen mit ovalem Querschnitt.

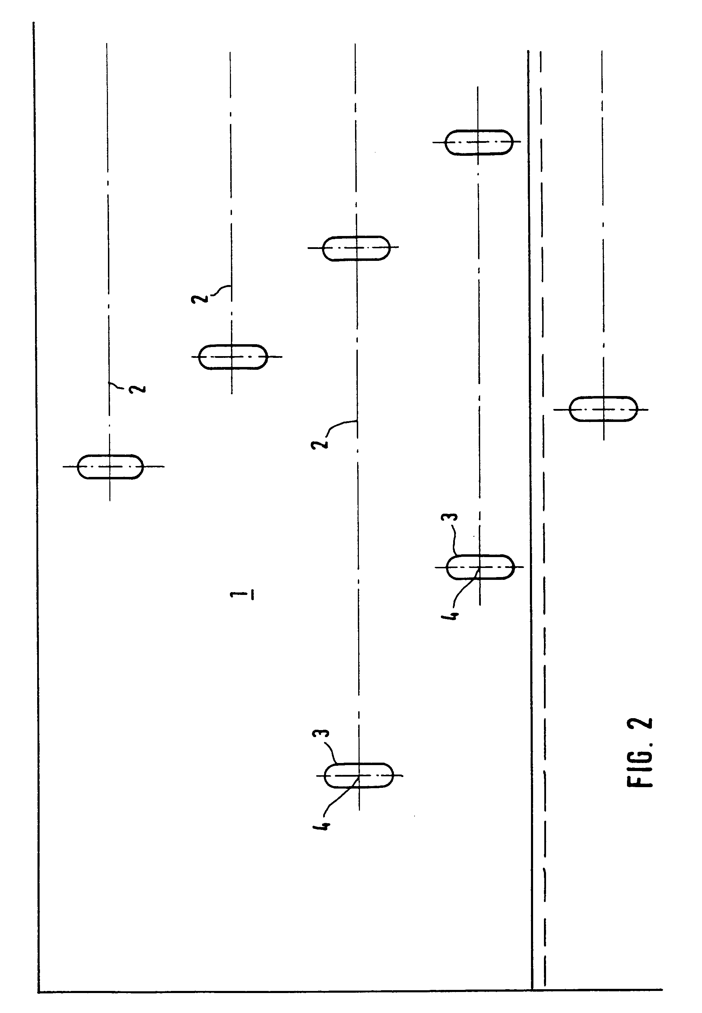

Wie Figur 2 erkennen läßt, in der ein Teil einer abgewickelten Hohlwelle dargestellt ist, sind auf deren Oberfläche eine Vielzahl von langgestreckten Öffnungen 3 angeordnet, deren Längsrichtung senkrecht zur Längsachse der Hohlrippen 2 verlaufen und deren Mittelpunkte 4 mit den Scheitelpunkten der Hohlrippe 2 zusammenfallen. Ferner läßt Figur 2 erkennen, daß die Öffnungen 3 benachbarter Hohlrippen 2 versetzt zueinander bezüglich eines Querschnitts durch die Hohlwellen 1 angeordnet sind.

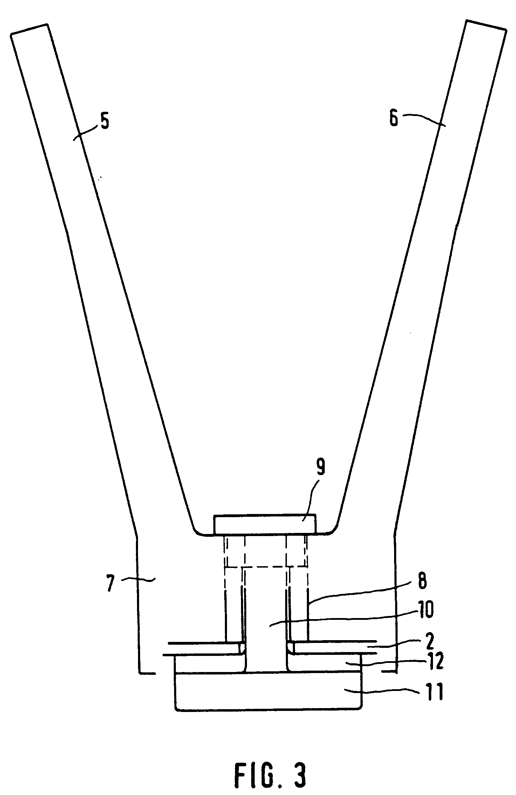

Figur 3 zeigt einen Querschnitt durch ein V-förmiges Fingerpaar in einer Ebene parallel zur Längsachse der Hohlwelle. Mit 5, 6 sind die beiden Finger bezeichnet, die zur eigentlichen Aufbereitung des Erntegutes dienen. Die beiden Finger 5, 6 sind fest mit einem Haltefuß 7 verbunden, dessen Längsachse sich in Verbindungsrichtung der beiden Finger 5, 6 erstreckt und der an seiner Unterseite eine an die Hohlrippe 2 und an die Oberfläche der Hohlwelle 1 angepaßte Form aufweist. Der Haltefuß 7 ist mit einer zentralen Öffnung 8 versehen, in die ein Haltebolzen 10 einsetzbar ist, dessen unteres Ende sich bis in das Innere der Hohlwelle 1 erstreckt und mit einem Klemmstück 11 versehen ist, dessen an der Unterseite der Hohlrippe 2 anliegende Oberfläche 12 eine an die Hohlrippe angepaßte Form aufweist. Mit 9 ist eine Unterlegscheibe bzw. ein Halteflansch bezeichnet.

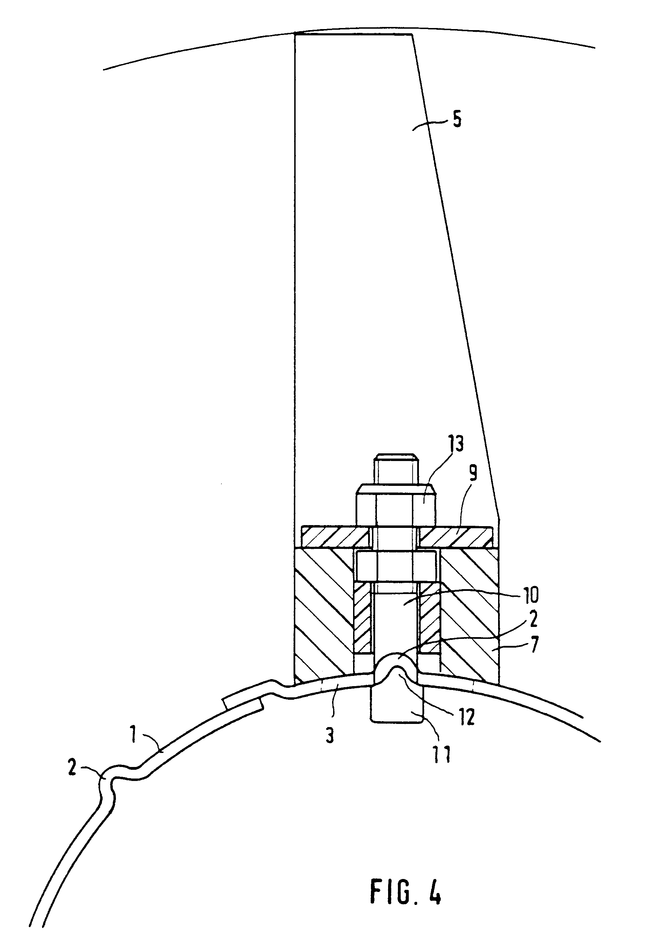

Figur 4 zeigt einen um 90° bezüglich der Darstellung von Figur 3 versetzten Querschnitt durch das V-förmige Fingerpaar in einer Ebene, die einen Querschnitt der Hohlwelle bildet. Hieraus wird besonders gut die Befestigung des V-förmigen Fingerpaars 5, 6 an der Hohlwelle 1 ersichtlich.

Der die zentrale Öffnung 8 im Fußstück 7 durchsetzende Haltebolzen 8 mit seinem Klemmstück 11 wird durch die sich quer zur Längsrichtung der Rippe 2 erstreckende Öffnung in das Innere der Hohlwelle 1 eingeführt und dort um 90° verschwenkt. Danach wird die Mutter 13 angezogen, wodurch sich die an die Form der Rippe 2 angepaßte Oberfläche 12 des Klemmstücks 11 in das Innere der Hohlrippe 2 eindringt und an deren Form anschmiegt. Die Unterseite des Haltefußes 7 ist an die gewölbte Oberfläche der Hohlwelle 1 und das Mittelteil des Haltefußes 7 an die Oberfläche der Hohlrippe 2 angepaßt, so daß eine ausgezeichnete Klemmwirkung zwischen dem Haltefuß 7 und der Hohlwelle 1 erzielt wird.

In Figuren 5 und 6 sind zwei um 90° zueinander versetzte Seitenansichten des Haltebolzens 10 mit dem Klemmstück 11 und der an die Innenform der Hohlrippe 2 angepaßte Oberfläche 12 dargestellt.

Der Haltebolzen 10, der zusammen mit dem Klemmstück 11 eine T-Form aufweist, ist als einstückiges Schmiedeteil ausgestaltet. Die Länge der Längsachse des Klemmstücks 11 entspricht dabei im wesentlichen der Länge der Längsachse einer jeden Öffnung 3.

Der erfindungsgemäße Aufbereiter ist leicht und billig herstellbar, da er nur einen geringen Montageaufwand erfordert.

Die aus Kunststoff bestehenden V-förmigen Fingerpaare weisen eine gewisse Elastizität auf, so daß sie trotz der hohen Klemmwirkung des Fußteils an der Hohlwelle Hindernissen ausweichen können. Auch nach einer eventuellen Beschädigung bzw. Zerstörung sind diese Teile leicht und kostengünstig auswechselbar.

## Patentansprüche

1. Aufbereiter für mit Mähscheiben versehene landwirtschaftliche Erntemaschinen, insbesondere Kreiselmäher, bestehend aus einer, in Fahrtrichtung der Maschine gesehen, hinter den Mähscheiben angeordneten, sich quer zur Fahrtrichtung der Maschine erstreckenden, im wesentlichen zylindrischen Hohlwelle (1), an der eine Vielzahl von sich radial nach außen erstreckenden V-förmigen Fingerpaaren (5, 6) befestigt ist, dadurch gekennzeichnet, daß die Oberfläche der Hohlwelle (1) mit mehreren parallel zur Längsachse der Hohlwelle (1) verlaufenden und im Abstand voneinander angeordneten, sich im wesentlichen über die gesamte Länge der Hohlwelle (1) erstreckenden und peripher nach außen ragenden Hohlrippen (2) versehen ist, und daß jedes V-förmige Fingerpaar fest mit einem Haltefuß (7) verbunden ist, dessen Längsachse sich in Verbindungsrichtung der beiden Finger (5, 6) erstreckt und der an seiner Unterseite eine an die Hohlrippe (2) und die Oberfläche der Hohlwelle (1) angepaßte Form aufweist.

2. Aufbereiter nach Anspruch 1, dadurch gekennzeichnet, daß der Querschnitt der Hohlrippe (2) die Form eines Dreiecks aufweist.

3. Aufbereiter nach Anspruch 1, dadurch gekennzeichnet, daß der Querschnitt der Hohlrippen (2) die Form eines halben Ovals aufweisen.

4. Aufbereiter nach einem der vorhergehenden Ansprüche, dadurch gekennzeichnet, daß die Hohlwelle mit einer Vielzahl von langgestreckten Öffnungen (3) versehen ist, deren Längsrichtung senkrecht zur Längsachse der Hohlrippen (2) verlaufen und deren Mittelpunkte (4) mit den Scheitelpunkten der Hohlrippen (2) zusammenfallen.

5. Aufbereiter nach Anspruch 4, dadurch gekennzeichnet, daß die Öffnungen (3) benachbarter Hohlrippen versetzt zueinander bezüglich eines Hohlwellenquerschnitts angeordnet sind.

6. Aufbereiter nach einem der vorhergehenden Ansprüche, dadurch gekennzeichnet, daß der Haltefuß (7) eine zentrale Öffnung (8) aufweist, in der ein Haltebolzen (10) eingesetzt ist, dessen unteres Ende sich bis in das Innere der Hohlwelle (1) erstreckt und mit einem Klemmstück (11) versehen ist, dessen an der Unterseite der Hohlrippe (2) anliegende Oberfläche (12) eine an diese angepaßte Form aufweist.

7. Aufbereiter nach Anspruch 6, dadurch gekennzeichnet, daß die Längsachse des Klemmstücks (11) im wesentlichen die gleiche Länge aufweist wie die Längsachse der Öffnung (3).

8. Aufbereiter nach Anspruch 6 und 7, dadurch gekennzeichnet, daß der Haltebolzen (10) und das Klemmstück zusammen T-Form aufweisen und als einstückiges Schmiedeteil ausgebildet sind.

## Claims

1. Conditioning device for agricultural harvesting machines provided with mower discs, more especially for rotary-type mowers, including a substantially cylindrical hollow shaft (1), which is disposed behind the mower discs when viewed with respect to the direction of travel of the machine and extends transversely relative to the direction of travel of the machine, a plurality of radially outwardly extending V-shaped pairs of fingers (5, 6) being mounted on said hollow shaft, characterised in that the surface of the hollow shaft (1) is provided with a plurality of peripherally outwardly protruding hollow ribs (2), which extend parallel to the longitudinal axis of the hollow shaft (1), are disposed with a spacing therebetween and extend over substantially the entire length of the hollow shaft (1), and in that each V-shaped pair of fingers is securedly connected to a supporting base (7), the longitudinal axis of which extends in the direction of connection of the two fingers (5, 6), and said supporting base has, on its underside, a configuration which is adapted to the hollow rib (2) and the surface of the hollow shaft (1).

2. Conditioning device according to claim 1, characterised in that the cross-section of the hollow rib (2) has the configuration of a triangle.

3. Conditioning device according to claim 1, characterised in that the cross-section of the hollow ribs (2) has the configuration of half an oval.

4. Conditioning device according to one of the preceding claims, characterised in that the hollow shaft is provided with a plurality of elongate apertures (3), the longitudinal direction of which extends perpendicular to the longitudinal axis of the hollow ribs (2), and the centres (4) of said apertures coincide with the apexes of the hollow ribs (2).

5. Conditioning device according to claim 4, characterised in that the apertures (3) of adjacent hollow ribs are offset from one another with respect to a hollow shaft cross-section.

6. Conditioning device according to one of the preceding claims, characterised in that the supporting base (7) has a central aperture (8), in which a retaining bolt (10) is inserted, the lower end of said bolt extending into the interior of the hollow shaft (1) and being provided with a clamping member (11), the surface (12) of which abuts against the underside of the hollow rib (2) and has a configuration adapted to said hollow rib.

7. Conditioning device according to claim 6, characterized in that the longitudinal axis of the clamping member (11) has substantially the same length as the longitudinal axis of the aperture (3).

8. Conditioning device according to claims 6 and 7, characterised in that the retaining bolt (10) and the clamping member together have a T-shaped configuration and are in the form of an integral, forged component part.

## Revendications

1. Dispositif de préparation pour des moissonneuses agricoles pourvues de disques faucheurs, notamment des rotofaucheuses, constitué d'un arbre creux (1) sensiblement cylindrique, disposé en regardant suivant la direction d'avance de la machine, derrière les disques faucheurs et s'étendant transversalement à la direction d'avance de la machine, auquel sont fixés un grand nombre de paires de doigts (5, 6) en forme de V s'étendant radialement vers l'extérieur, caractérisé en ce que la sur face de l'arbre creux (1) est pour vue de plusieurs nervures creuses (2) s'étendant parallèlement à l'axe longitudinal de l'arbre creux (1) et disposées à une certaine distance les unes des autres, s'étendant sur sensiblement toute la longueur de l'arbre creux (1) et faisant saillie périphériquement vers l'extérieur, et en ce que chaque paire de doigts en forme de V est reliée solidement à un pied de retenue (7) dont l'axe longitudinal s'étend dans la direction de liaison des deux doigts (5, 6), et qui présente à son côté inférieur une forme adaptée à la nervure creuse (2) et à la surface de l'arbre creux (1).

2. Dispositif de préparation selon la revendication 1 , caractérisé en ce que la nervure creuse (2) présente en section transversale la forme d'un triangle.

3. Dispositif de préparation selon la revendication 1 , caractérisé en ce que les nervures creuses (2) présentent en section transversale la forme d'un demi ovale.

4. Dispositif de préparation selon l'une des revendications précédentes, caractérisé en ce que l'arbre creux est pourvu d'un grand nombre d'ouvertures oblongues (3) dont la direction longitudinale s'étend perpendiculairement à l'axe longitudinal des nervures creuses (2), et dont les centres (4) coïncident avec les sommets des nervures creuses (2).

5. Dispositif de préparation selon la revendication 4, caractérisé en ce que les ouvertures (3) de nervures creuses avoisinantes sont disposées de façon décalée les unes par rapport aux autres relativement à une section transversale de l'arbre creux.

6. Dispositif de préparation selon l'une des revendications précédentes, caractérisé en ce que le pied de retenue (7) présente une ouverture centrale (8) dans laquelle est inséré un boulon de retenue (10), dont l'extrémité inférieure s'étend jusque dans l'intérieur de l'arbre creux (1) et qui est pour vue d'une pièce de serrage (11) dont la surface (12) s'appliquant au côté inférieur de la nervure creuse (2) présente une forme adaptée à celle-ci.

7. Dispositif de préparation selon la revendication 6, caractérisé en ce que l'axe longitudinal de la pièce de serrage (11) a sensiblement la même longueur que l'axe longitudinal de l'ouverture (3).

8. Dispositif de préparation selon la revendication 6 et 7, caractérisé en ce que le boulon de retenue (10) et la pièce de serrage ont conjointement une forme en T et sont réalisés sous forme de pièce forgée en une pièce.
